# EUROPEAN PATENT APPLICATION

(11) **EP 2 418 263 A1**
(43) Date of publication of application: **15.02.2012**
(21) Application number: 11250713.2
(22) Date of filing: 08.08.2011
(51) Int. Cl.: C09K 8/516, E21B 43/04

(54) **Swellable elastomer for water shut off in gravel pack**

(30) Priority: 09.08.2010 US 853098
(71) Applicant: Weatherford/Lamb, Inc., Houston, TX 77027 (US)
(72) Inventor: Lembcke, Jeffrey John, Cypress Texas 77429 (US)
(74) Representative: Shanks, Andrew

(57) **Abstract**

An improved gravel pack material includes granules of a swellable elastomer selected to trigger by a surrounding fluid. When a fluid breakthrough occurs in a gravel-packed well, the swellable elastomer granules swell in the presence of the fluid at the point of the breakthrough, sealing off or reducing the flow of the fluid through the breakthrough into the well.

## Description

### TECHNICAL FIELD

The present invention relates to the field of downhole tools, and in particular to gravel pack completions.

### BACKGROUND ART

Gravel packing is a method of well completion in which a slotted or perforated liner is placed in a well and surrounded with a gravel mixture. Gravel packing is most commonly used in the open hole wells, but may also be used in cased wells. The mass of gravel in the gravel pack excludes sand from the wellbore, while allowing continued production.

### SUMMARY OF INVENTION

By mixing granules of swellable elastomer into the gravel pack, fluid breakthroughs can be restricted or eliminated in a self-actuated self-healing gravel pack completion.

According to a first aspect of the invention, there is provided a gravel pack material, comprising: a mixture comprising: a first volume of gravel; and a second volume of granules of a swellable elastomeric material, selected to expand on exposure to a predetermined well fluid.

The predetermined well fluid may be water.

The predetermined well fluid may be a combination of hydrocarbons and water.

The gravel may comprise particles of a first average size.

The granules of the swellable elastomeric material may be formed of a second average size corresponding to the first average size.

The granules of the swellable elastomeric material may be formed of a second average size which is less than the first average size.

The second volume of granules of the swellable elastomeric material may be at least 25% of the first volume of gravel.

The granules of the swellable elastomeric material may be formed with irregular shapes.

According to another aspect of the invention, there is provided a material comprising: granules formed of a swellable elastomeric material, selected to expand on exposure to a predetermined well fluid, wherein the granules are sized for mixture with a gravel.

The gravel may be formed of particles of a predetermined average size.

The granules may be formed of an average size selected based on the average size of the particles of gravel.

The predetermined well fluid may be water.

The predetermined well fluid may be a combination of hydrocarbons and water.

The predetermined well fluid may be a hydrocarbon.

According to another aspect of the invention, there is provided a method of gravel packing a well, comprising: positioning a tubular in a wellbore, forming an annulus between the tubular and a surrounding surface; and depositing a gravel pack formed of a mixture of gravel particles and granules of a swellable elastomeric material in the annulus, wherein the swellable elastomer is selected to expand on exposure to a predetermined well fluid.

The method may further comprise mixing the gravel and the granules of the swellable elastomeric material at the well.

The predetermined well fluid may be water.

The predetermined well fluid may be a hydrocarbon.

The method may further comprise forming the granules of the swellable elastomeric material to have an average size less than an average size of the gravel particles.

The method may further comprise forming the granules of the swellable elastomeric material to have an average size corresponding to an average size of the gravel particles.

The method may further comprise mixing a first volume of the gravel particles with a second volume of the granules of swellable elastomeric material to form the gravel pack, wherein the second volume is at least 25% of the first volume.

The method may further comprise forming the granules of the swellable elastomeric material to have an irregular shape.

It should be understood that the features defined above in accordance with any aspect of the present invention or below in relation to any specific embodiment of the invention may be utilised, either alone or in combination, with any other defined feature, in any other aspect of the invention.

### BRIEF DESCRIPTION OF DRAWINGS

The accompanying drawings, which are incorporated in and constitute a part of this specification, illustrate an implementation of apparatus and methods consistent with the present invention and, together with the detailed description, serve to explain advantages and principles consistent with the invention. In the drawings,

Figure **1** is a cutaway view illustrating a gravel pack completion according to the prior art with a fluid breakthrough.

Figure **2** is a cutaway view illustrating a gravel pack completion according to one embodiment.

Figure **3** is a cutaway view illustrating a self-actuated closure of a fluid breakthrough achieved by the embodiment of FIG. **2****.**

### DESCRIPTION OF EMBODIMENTS

In the following description, for purposes of explanation, numerous specific details are set forth in order to provide a thorough understanding of the invention. It will be apparent, however, to one skilled in the art that the invention may be practiced without these specific details. In other instances, structure and devices are shown in block diagram form in order to avoid obscuring the invention. References to numbers without subscripts or suffixes are understood to reference all instance of subscripts and suffixes corresponding to the referenced number. Moreover, the language used in this disclosure has been principally selected for readability and instructional purposes, and may not have been selected to delineate or circumscribe the inventive subject matter, resort to the claims being necessary to determine such inventive subject matter. Reference in the specification to "one embodiment" or to "an embodiment" means that a particular feature, structure, or characteristic described in connection with the embodiments is included in at least one embodiment of the invention, and multiple references to "one embodiment" or "an embodiment" should not be understood as necessarily all referring to the same embodiment.

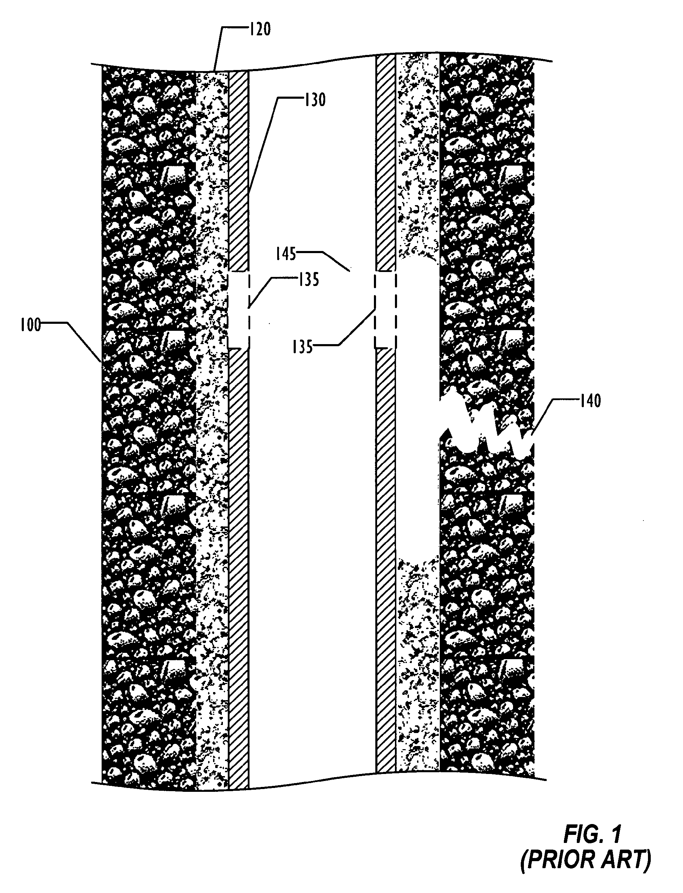

One problem with gravel pack completions has been fluid breakthroughs from the surrounding strata. FIG. 1 is a cutaway view of a typical gravel-packed completion according to the prior art. A tubular 130 is inserted into the open hole well, with slots 135 allowing fluid passage in the annulus between the tubular 130 and the open hole rock or sands 100. A gravel pack 120 is inserted in the annulus between the tubular 130 and the open hole.

When a crack or fissure 140 occurs in the surrounding open hole 100, water or other fluids may leak into the annulus, flowing through the gravel pack 120 and into the bore of the tubular 130 through slots 135, as illustrated in area 145 in FIG. 1. Such a fluid breakthrough can be difficult to shut off. In conventional gravel pack completions, packers between zones and the water shut off sleeves that require intervention to close have been used to shut off fluid breakthroughs.

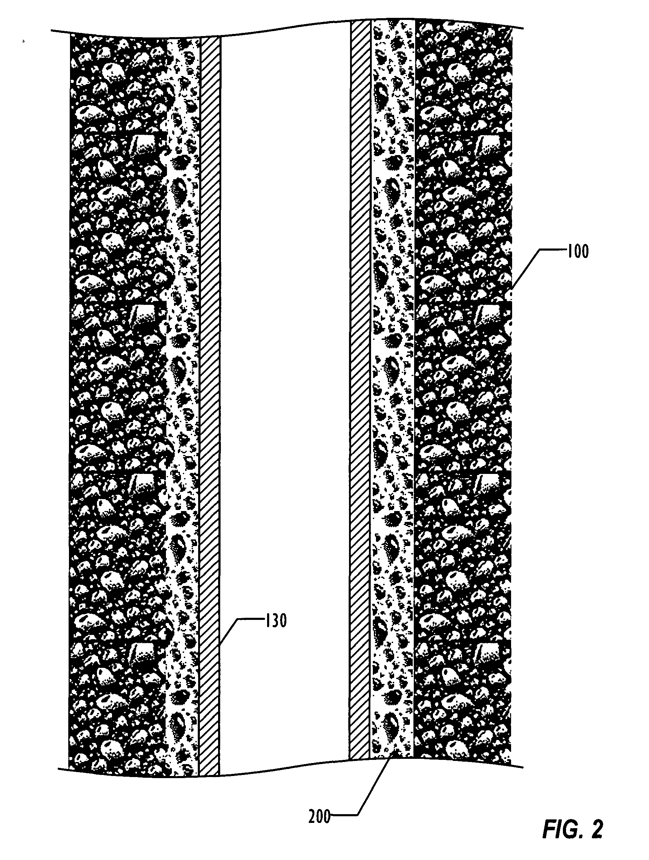

FIG. 2 illustrates an improved gravel pack completion technique using a gravel pack 200 according to one embodiment that may eliminate or reduce the problem illustrated in FIG 1. In addition to conventional gravel, the improved gravel pack 200 includes a predetermined amount of a swellable elastomer preformed as granules that are mixed into the gravel pack. During normal operation after the gravel packing, the improved gravel pack 200 operates just as the conventional gravel pack 120, with the gravel and elastomer mixture excluding sand from traversing the slots 135 and entering the bore of the tubular 130.

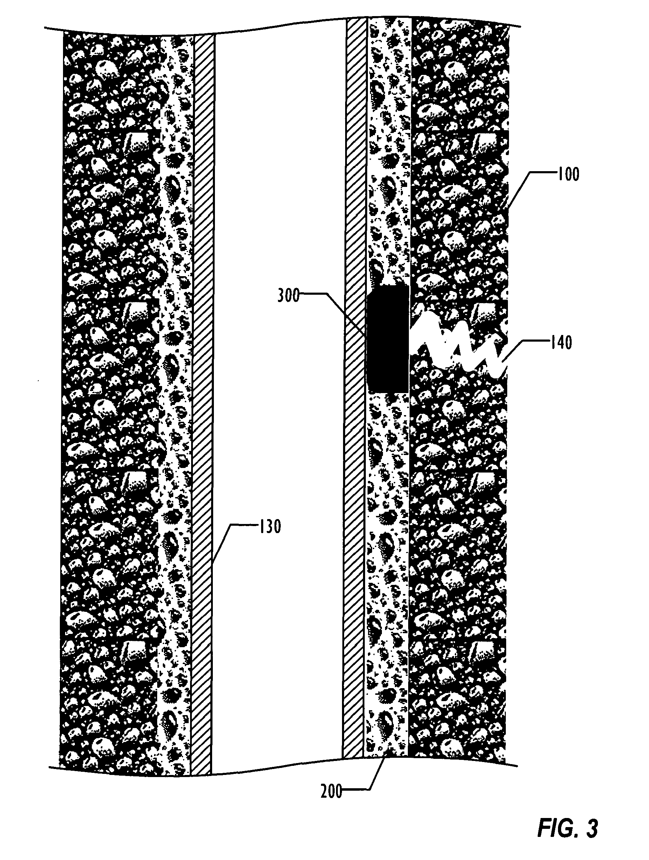

As illustrated in FIG. 3, however, when a water or other fluid breakthrough occurs through fissure 140, the swellable elastomer granules in area 300 swell in the presence of a fluid and at least partially restrict or shut off the flow of fluid into the tubular. This creates an autonomous self-actuated fluid shut off in the improved gravel pack 200 itself.

Only the area 300 of the gravel pack 200 that is in contact with the triggering fluid actuates, thus other portions of the gravel pack 200 may continue to function normally. Because swellable material such as are selected for the improved gravel pack 200 remain swollen once they have been exposed to their triggering fluid, the shut off is long lasting and may indeed be permanent.

Many gravel pack wells are in areas where the open hole breakthrough would be a water breakthrough, thus in one embodiment, the swellable elastomer granules are formed of a material selected to swell when exposed to water, such as a nitrile, or a nitrile mixed with a super absorbent polymer. In other embodiments, where the fluid may be a hydrocarbon fluid, or a mixture of water and hydrocarbons, the elastomer granules may be formed of an ethylene propylene diene monomer (EPDM) or a mixture of nitrile and EPDM granules.

The granules may be formed as irregular chunks of the swellable elastomer, or in any desired 3-dimensional configuration. The granules may be sized in multiple sizes, and in one embodiment may be sized to correspond to the average particle size of the gravel in the gravel pack 200. In other embodiments, the swellable elastomer particles are sized to be smaller than the average gravel particle size.

The swellable elastomer is preferably evenly mixed with the gravel. In one embodiment, the gravel-elastomer mixture may be mixed on-site. In other embodiments, the gravel and elastomer particles may be premixed off-site.

The desired relative percentage of gravel to elastomer particles may vary for different applications, but in most embodiments, the elastomeric granules may comprise at least 25% by volume of the gravel-elastomer mixture.

It is to be understood that the above description is intended to be illustrative, and not restrictive. For example, the above-described embodiments may be used in combination with each other. Many other embodiments will be apparent to those of skill in the art upon reviewing the above description. The scope of the invention therefore should be determined with reference to the appended claims, along with the full scope of equivalents to which such claims are entitled. In the appended claims, the terms "including" and "in which" are used as the plain-English equivalents of the respective terms "comprising" and "wherein."

## Claims

1. A gravel pack material, comprising:
a mixture comprising:
a first volume of gravel; and
a second volume of granules of a swellable elastomeric material, selected to expand on exposure to a predetermined well fluid.

2. The gravel pack material of claim 1, wherein the predetermined well fluid is water or a combination of hydrocarbons and water.

3. The gravel pack material of claim 1 or 2,
wherein the gravel comprises particles of a first average size; and
wherein the granules of the swellable elastomeric material are formed of a second average size corresponding to the first average size or wherein the granules of the swellable elastomeric are formed of a second average size which is less than the first average size.

4. The gravel pack material of claim 1, 2 or 3, wherein the second volume of granules of the swellable elastomeric material is at least 25% of the first volume of gravel.

5. The gravel pack material of any preceding claim, wherein the granules of the swellable elastomeric material are formed with irregular shapes.

6. A material, comprising:
granules formed of a swellable elastomeric material, selected to expand on exposure to a predetermined well fluid,
wherein the granules are sized for mixture with a gravel.

7. The material of claim 6,
wherein the gravel is formed of particles of a predetermined average size, and wherein the granules are formed of an average size selected based on the average size of the particles of gravel.

8. The material of claim 6 or 7, wherein the predetermined well fluid is water, a hydrocarbon or a combination of hydrocarbons and water.

9. A method of gravel packing a well; comprising:
positioning a tubular in a wellbore, forming an annulus between the tubular and a surrounding surface; and
depositing a gravel pack formed of a mixture of gravel particles and granules of a swellable elastomeric material in the annulus,
wherein the swellable elastomer is selected to expand on exposure to a predetermined well fluid.

10. The method of claim 9, further comprising:
mixing the gravel and the granules of the swellable elastomeric material at the well.

11. The method of claim 9 or 10,
wherein the predetermined well fluid is water or a hydrocarbon.

12. The method of any one of claims 9, 10 or 11, further comprising:
forming the granules of the swellable elastomeric material to have an average size less than an average size of the gravel particles or forming the granules of the swellable elastomeric material to have an average size corresponding to an average size of the gravel particles.

13. The method of any one of claims 9 to 12, further comprising:
mixing a first volume of the gravel particles with a second volume of the granules of swellable elastomeric material to form the gravel pack,
wherein the second volume is at least 25% of the first volume.

14. The method of any one of claims 9 to 13, further comprising:
forming the granules of the swellable elastomeric material to have an irregular shape.
